# EUROPEAN PATENT APPLICATION

(11) **EP 4 518 190 A1**
(43) Date of publication of application: **05.03.2025**
(21) Application number: 23194846.4
(22) Date of filing: 01.09.2023
(51) Int. Cl.: H04B 7/185

(54) **METHOD FOR PROVIDING COMMUNICATION SERVICES TO A USER EQUIPMENT USING AN ACCESS NETWORK OF OR ASSOCIATED WITH A MOBILE COMMUNICATION NETWORK, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for providing communication services to a user equipment using an access network of or associated with a mobile communication network, wherein the access network is or corresponds to, or at least comprises a part being, a non-terrestrial network,
wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network,
wherein the user equipment - while being located, during a time interval of a first kind of time intervals, at a location of a first kind of locations - is able to be served, by at least one base station entity of the access network, on the normal or increased quality-of-service level, and
wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level, wherein, in order for the user equipment to be provided with communication services, the method comprises the following steps:
-- in a first step and at a first point in time, the user equipment receives, using a control channel or a dedicated control channel, a service resume information from the mobile communication network while the user equipment being connected to the mobile communication network or while being in connected mode,
-- in a second step and at a second point in time, the access stratum of the user equipment indicates or forwards the service resume information to the non-access stratum of the user equipment.

## Description

### BACKGROUND

The present invention relates a method for providing communication services to a user equipment using an access network of or associated with a mobile communication network, wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network, wherein the user equipment- while being located, during a time interval of a first kind of time intervals, at a location of a first kind of locations - is able to be served, by at least one base station entity of the access network, on the normal or increased quality-of-service level, and wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level.

Furthermore, the present invention relates to a user equipment for being provided with communication services using an access network of or associated with a mobile communication network, wherein the user equipment is served by the access network, wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network, wherein the user equipment - while being located, during a time interval of a first kind of time intervals, at a location of a first kind of locations - is able to be served, by at least one base station entity of the access network, on the normal or increased quality-of-service level, and wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level.

Additionally, the present invention relates to a system or a mobile communication network for providing communication services to a user equipment using an access network of or associated with the mobile communication network, wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network, wherein the user equipment - while being located, during a time interval of a first kind of time intervals, at a location of a first kind of locations - is able to be served, by at least one base station entity of the access network, on the normal or increased quality-of-service level, and wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level.

Furthermore, the present invention relates to a program and to a computer-readable medium for providing communication services to a user equipment using an access network of or associated with a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies.

Such mobile communication networks that are purely or predominantly based on terrestrial infrastructures of the radio access network (and, hence, are also called terrestrial networks or TN-networks) are typically organized throughout a country (or a part of or a region within a country) in a repeating pattern of typically stationary (radio) cells (and associated base station entities) which typically belong to (or are operated or used by or associated or assigned to) a mobile network operator (MNO).
As part of such known terrestrial cellular telecommunications networks - or geographical areas or regions where such terrestrial cellular telecommunications networks are operated -, there are typically some (geographical) parts or locations where (at least in average, i.e. using a plurality of user equipments) a better radio coverage is typically experienced by user equipments, whereas in other (geographical) parts or locations worse radio coverage is experienced; i.e. a user equipment - while being located at a location of a first kind of locations - is able to be served, by at least one base station entity of the access network, on the normal or increased quality-of-service level, and the same or another user equipment - while being located at a location of the second kind of locations - is able to be served, by any base station entity of the access network, at maximum on a quality-of-service level inferior compared to the normal or increased quality-of-service level, thus, it might also be the case that such a user equipment is not able to be served at all (which would also correspond to a quality-of-service level inferior compared to the normal or increased quality-of-service level).
Such a dependence of the quality of the radio coverage (provided by the considered mobile communication network) on, mainly, the location of the considered user equipment mainly stems from the rather static nature of such mobile communication networks mainly relying on terrestrial networks or terrestrial infrastructure.

In contrast to such purely or predominantly terrestrial mobile communication networks, it is also known to provide communication services using non-terrestrial networks, i.e. mobile communication networks that use, at least partly, non-terrestrial infrastructures of the radio access network, especially using satellites and/or high-altitude platforms. Especially in case of using satellites - especially non-geostationary satellites that are preferred due to comparatively high latency characteristics of geostationary satellites -, one such satellite is typically able to provide (due to the movement of such a satellite relative to the earth surface, which relative movement typically occurs with rather large velocities, at least compared to typical (passenger) velocities used on the earth surface, e.g. by cars or by trains) radio coverage only in a specific combination of both a geographical area and a point in time, such that radio coverage is provided to another geographical area, in the direction of movement of the satellite, at a later point in time. Hence, a considered user equipment - while being located, during a time interval of a first kind of time intervals, at a location of a first kind of locations - is able to be served, by at least one base station entity of the access network, on the normal or increased quality-of-service level, and this considered user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level. Such a dependence of the quality of the radio coverage (provided by the considered mobile communication network) on both the location of the considered user equipment and the considered time interval stems from the dynamic nature of such mobile communication networks relying on non-terrestrial networks or non-terrestrial infrastructure.

Hence, discontinuous radio coverage (or modifications - and, thus degradations - of quality-of-service levels regarding radio coverage) is both possible in terrestrial network (especially in case that the user equipment is moving relative to stationary base station entities) and, typically even more so, in non-terrestrial networks, even in case of stationary user equipments; this being especially true in case that the satellite constellation is still being built or in case of shadowing effects (e.g. due to plants or buildings) blocking a direct line of sight between the user equipment and the serving satellite of high-altitude platform. This might prove especially detrimental in case of important or high-urgency communication services being provided to a user equipment, e.g. emergency calls or the like.

### SUMMARY

An object of the present invention is to provide a technically simple, effective and cost-effective solution for providing communication services to a user equipment using an access network of or associated with a mobile communication network, wherein in case of such discontinuous radio coverage - i.e. the user equipment is able to be served on the normal or increased quality-of-service level (while being located, during a time interval of a first kind of time intervals, at a location of a first kind of locations) and the user equipment is able to be served at maximum on a quality-of-service level inferior compared to the normal or increased quality-of-service level (while being located, during a time interval of a second kind of time intervals, at a location of either the first or the second kind of locations) - and even though radio coverage deteriorates or has already deteriorated, at least a minimum of communication services is able to be provided to the user equipment. A further object of the present invention is to provide a corresponding user equipment, a corresponding system or a corresponding mobile communication network, and a corresponding program and computer-readable medium.

The object of the present invention is achieved by a method for providing communication services to a user equipment using an access network of or associated with a mobile communication network,
wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network, wherein the user equipment - while being located, during a time interval of a first kind of time intervals, at a location of a first kind of locations - is able to be served, by at least one base station entity of the access network, on the normal or increased quality-of-service level, and
wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level, wherein, in order for the user equipment to be provided with communication services, the method comprises the following steps:
   -- in a first step and at a first point in time, the user equipment receives, using an access stratum control channel or an access stratum dedicated control channel, a service resume information from the mobile communication network while the user equipment being connected to the mobile communication network or while being in connected mode,
   -- in the second step and at a second point in time, the access stratum of the user equipment indicates or forwards the service resume information to the non-access stratum of the user equipment.

Especially by means of providing the user equipment with a service resume information, it is advantageously possible, according to the present invention, to provide information, to the user equipment, about a (future or present) deterioration of the quality-of-service level, how to best respond to such a deterioration of the quality-of-service level and/or what to possibly do to avoid or at least to mitigate such a deterioration, and, also, when to again expect a better quality-of-service level.

In conventionally known mobile communication networks, non-terrestrial networks are used, inter alia, to provide network coverage in (geographical) areas that are not covered by terrestrial networks (TN). One use case thereof is to provide emergency call (EC) services in remote areas of a country. The access to non-terrestrial networks with regular handsets might be already possible and will be possible based on the 3GPP Rel-17 and -18 definition of non-terrestrial network functionality. Approaches for "direct-2-device" are also currently being discussed, providing low bitrate services to unmodified LTE handsets (-> "SpaceX D2D"). Nevertheless, at least the following problems might not be entirely solved even using non-terrestrial networks:
-- avoidance of shadowing effects (of vegetation or buildings) blocking the direct (line of sight) view to the sky or satellite to have an optimal radio link between the terminal (or user equipment) and the satellite;
-- avoidance of a significantly low signal-to-noise ratio (SNR) in case of very weak satellite signals;
-- discontinuous satellite coverage, especially if the satellite constellation is still being built.
As a consequence, even when using non-terrestrial networks, it might happen that specific services - such as the emergency service - cannot be provided reliably enough especially due to the movement of the satellites and a missing "following satellite" to keep the connections being maintained over a longer time.

According to the present invention and by means of transmitting the service resume information to the user equipment, it is advantageously possible to actively provide an information to the user equipment, where and/or when the user equipment could gain a better quality-of-service level or a better (radio) signal level. This service resume information is transmitted by using control plane signaling - especially using an access stratum control channel or an access stratum dedicated control channel - from the mobile communication network (especially being or at least comprising a cellular terrestrial network and/or a cellular non-terrestrial network). Especially, the service resume information is used (especially in case of a non-terrestrial network) to indicate the dynamically changing satellite coverage of such a non-terrestrial network, due to the movement of serving satellites.

According to the present invention, a user equipment uses an access network of or associated with a mobile communication network. As is typically, and conventionally, the case, user plane data and/or control plane data are transmitted, in uplink and/or in downlink direction, between the user equipment and the mobile communication network; this typically assumes that such communication services are provided, to the user equipment, on a normal or increased quality-of-service level, and the user equipment needs to be connected to the mobile communication network (and/or the user equipment is in connected mode).
At different locations and during different time intervals different quality-of-service are possible:
-- while being located, during a time interval of a first kind of time intervals, at a location of a first kind of locations - the user equipment is able to be served, by at least one base station entity of the access network, on the normal or increased quality-of-service level, whereas
-- while being located, during a time interval of a second kind of time intervals, at a location of either the first or the second kind of locations - the user equipment is (only) able to be served (by any base station entity of the access network) at maximum on a quality-of-service level inferior compared to the normal or increased quality-of-service level.
Specifically according to the present invention, in order for the user equipment to be provided with communication services, the method comprises the following steps:
-- in a first step and at a first point in time, the user equipment receives, using an access stratum control channel or an access stratum dedicated control channel, a service resume information from the mobile communication network while the user equipment being connected to the mobile communication network or while being in connected mode,
-- in the second step and at a second point in time, the access stratum of the user equipment indicates or forwards the service resume information to the non-access stratum of the user equipment.
The access stratum and the non-access stratum typically relate to different layers within the user equipment.

According to the present invention, it is advantageously possible and preferred that the access network is or corresponds to, or at least comprises a part being, a non-terrestrial network.

It is thereby advantageously possible to use the present invention with a non-terrestrial network.

According to the present invention, it is advantageously furthermore possible and preferred that, especially in the second step - and especially at or subsequent to the second point in time -, the user equipment indicates, via local signaling or via an actuator or display means, a service resume indication,
wherein especially the service resume indication comprises, or is intended to comprise an information relating to at least one time interval of the first kind of time intervals and/or at least one location of the first kind of locations,
wherein especially the at least one time interval of the first kind of time intervals and/or the at least one location of the first kind of locations is indicated, especially visually, haptically and/or acoustically, to a user of the user equipment, especially using a display means of the user equipment and/or using a display means of a device locally connected to the user equipment,
wherein especially the service resume indication comprises a service level indication regarding the service level to be expected during the at least one time interval of the first kind of time intervals and/or the at least one location of the first kind of locations indicated by the service resume indication.

It is thereby advantageously possible to easily and efficiently implement the present invention, especially by means of the user equipment indicating, via local signaling or via an actuator or display means, the service resume indication to the user equipment of the user equipment.

According to the present invention, it is furthermore advantageously possible and preferred that the first point in time, at which the service resume information is received by the user equipment, precedes the second point in time, at which the user equipment indicates the service resume indication,
wherein especially the service resume information is received, by the user equipment, in case that a quality-of-service level, monitored by the user equipment and/or by the access network, is determined to be inferior to a specific predefined serving cell quality threshold.

It is thereby advantageously possible according to the present invention to realize and implement the inventive method in a comparatively simple and efficient manner, and, especially, to transmit the service resume information preferably only in situations where this is beneficial.

Furthermore, it is advantageously possible and preferred according to the present invention that
-- the first point in time occurs during a time interval of the first kind of time intervals and while the user equipment is located at a location of the first kind of locations, and the second point in time occurs during a time interval of the second kind of time intervals and while the user equipment is located at either the first or the second kind of locations, or
-- both the first point in time and the second point in time occur during a time interval of the first kind of time intervals and while the user equipment is located at a location of the first kind of locations, or
-- both the first point in time and the second point in time occur during a time interval of the second kind of time intervals and while the user equipment is located at a location of either the first or the second kind of locations.

It is thereby advantageously possible according to the present invention to realize and implement the inventive method in a comparatively simple and efficient manner.

According to the present invention, it is furthermore advantageously possible and preferred that the service resume indication informs the user of the user equipment
-- of a comparatively shortly starting subsequent time interval of the first kind of time intervals, especially a subsequent time interval of the first kind of time intervals starting in 10 seconds, or in 15 seconds, or in 20 seconds, or in 25 seconds, or in 30 seconds, or in 40 seconds, or in 50 seconds, or in 60 seconds,
   and/or
-- of a comparatively nearby location of the first kind of locations, especially a comparatively nearby location of the first kind of locations that is able to be reached in 100 meters, on in 200 meters, or in 300 meters, or in 400 meters, or in 500 meters, or in 750 meters, or in 1000 meters, or in 2 km, or in 3 km or in 5 km, wherein the service resume indication especially comprises a directional indication, in which direction the comparatively nearby location of the first kind of locations is able to be reached, the directional indication especially indicating a northern, eastern, southern, or western direction, or directions in between these directions.

It is thereby advantageously possible according to the present invention to realize and implement the inventive method in a comparatively simple and efficient manner.

Furthermore, it is advantageously possible and preferred according to the present invention that
-- in case that the second point in time occurs during a time interval of the first kind of time intervals and while the user equipment is located at a location of the first kind of locations, the service resume indication informs the user of the user equipment that the current time interval of the first kind of time intervals is elapsing soon and/or that the first kind of locations is extending, or moving in a specific direction, and/or
-- in case that the second point in time occurs during a time interval of the second kind of time intervals and while the user equipment is located at a location of either the first or second kind of locations, the service resume indication informs the user of the user equipment that the current time interval of the second kind of time intervals is elapsing soon and/or that either the first or the second kind of locations is extending, or moving in a specific direction.

It is thereby advantageously possible according to the present invention to realize and implement the inventive method in a comparatively simple and efficient manner.

According to the present invention, it is furthermore advantageously possible and preferred that the service resume information is transmitted using control channel and/or a control channel message and/or a non-access stratum message, especially one or a plurality out of the following:
-- a downlink dedicated control channel, DL-DCCH, message, especially a radio resource control reconfiguration, RRC-Reconfiguration, message and/or a downlink information transfer, DL-Information-Transfer, message,
-- a non-access stratum message, especially a non-access stratum registration accept message, NAS:RegistrationAccept message, and/or a non-access stratum tracking area update accept message, NAS:TrackingAreaUpdateAccept message,
wherein especially the service resume information comprises at least one out of the following, especially in view of service continuation during the subsequent time interval of the first kind of time intervals and/or at the target location of the first kind of locations:
-- frequency information.
-- timing information,
-- time-frequency information, especially information regarding specific physical resource blocks to use in case of a comparatively low quality-of-service level, wherein especially the service resume information is transmitted using a channel having reliable channel characteristics, especially a more robust coding scheme, especially using quadrature phase-shift keying, QPSK, binary phase-shift keying, BPSK, on-off-keying, OOK and/or a more robust hybrid-automatic repeat request, H-ARQ retransmission scheme and/or a new physical channel for transmission.

It is thereby advantageously possible according to the present invention to realize and implement the inventive method in a comparatively simple and efficient manner.

Furthermore, it is advantageously possible and preferred according to the present invention that the service resume information and/or the service resume indication comprises a global navigation satellite system reference point and/or a map information and/or a polygon information, the global navigation satellite system reference point and/or the map information and/or the polygon information indicating better radio coverage and/or a better quality-of-service level and/or where the communication service is intended to continue, wherein especially the user equipment calculates the vector from its current position to the target position.

It is thereby advantageously possible according to the present invention to realize and implement the inventive method in a comparatively simple and efficient manner.

Furthermore, the present invention relates to a user equipment for being provided with communication services using an access network of or associated with a mobile communication network, wherein the user equipment is served by the access network,
wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network, wherein the user equipment - while being located, during a time interval of a first kind of time intervals, at a location of a first kind of locations - is able to be served, by at least one base station entity of the access network, on the normal or increased quality-of-service level, and
wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level, wherein, in order for the user equipment to be provided with communication services, the user equipment is configured such that:
   -- at a first point in time, the user equipment receives, using a control channel or a dedicated control channel, a service resume information from the mobile communication network while the user equipment being connected to the mobile communication network or while being in connected mode,
   -- at a second point in time, the access stratum of the user equipment indicates or forwards the service resume information to the non-access stratum of the user equipment.

Furthermore, the present invention relates to a system or to a mobile communication network for providing communication services to a user equipment using an access network of or associated with the mobile communication network,
wherein - in order to provide communication services on a normal or increased quality-of-service level to the user equipment, and while the user equipment is connected to the mobile communication network or while the user equipment is in connected mode - user plane data and/or control plane data are transmitted, in uplink and/or in downlink direction, between the user equipment and the mobile communication network,
wherein the user equipment - while being located, during a time interval of a first kind of time intervals, at a location of a first kind of locations - is able to be served, by at least one base station entity of the access network, on the normal or increased quality-of-service level, and
wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level, wherein, in order for the user equipment to be provided with communication services, the system or the mobile communication network is configured such that:
   -- at a first point in time, the user equipment receives, using a control channel or a dedicated control channel, a service resume information from the mobile communication network while the user equipment being connected to the mobile communication network or while being in connected mode,
   -- at a second point in time, the access stratum of the user equipment indicates or forwards the service resume information to the non-access stratum of the user equipment.

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

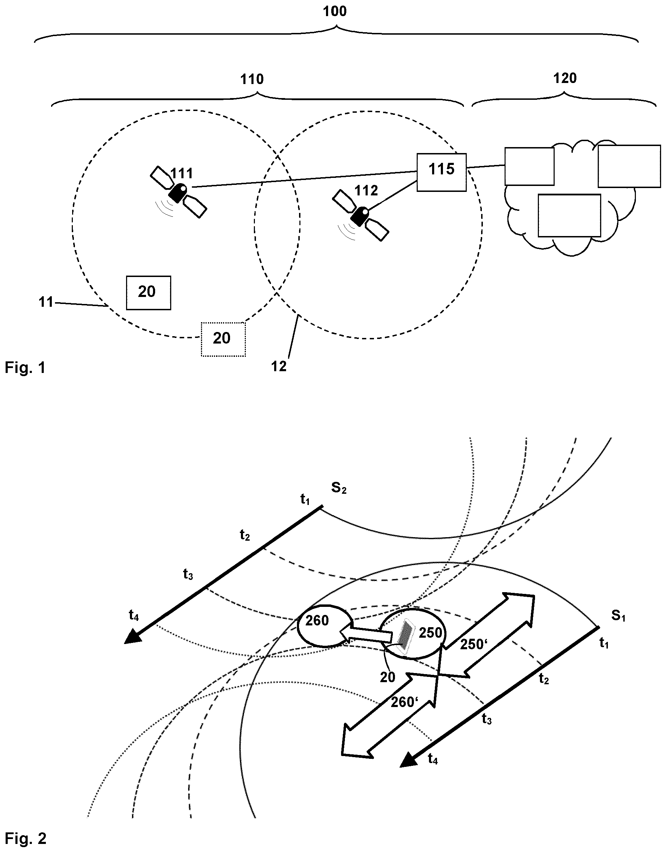

Figure 1 schematically illustrates the situation of a user equipment in a mobile communication network and using an access network of or associated with the mobile communication network, wherein communication services are able to be provided, to the user equipment, on a normal or increased quality-of-service level (in case that radio coverage is rather good) and wherein (in case of worse radio transmission conditions) communication services are able to be provided at maximum on an inferior quality-of-service level.
Figure 2 schematically and exemplarily illustrates, in greater detail, just such a situation, i.e. of the user equipment - while being located, during a time interval of a first kind of time intervals, at a location of a first kind of locations - is able to be served, by at least one base station entity of the access network, on the normal or increased quality-of-service level, and wherein the user equipment - while being located, during a time interval of a second kind of time intervals, at a location of either the first or the second kind of locations - is able to be served, by any base station entity of the access network, at maximum on a quality-of-service level inferior compared to the normal or increased quality-of-service level.

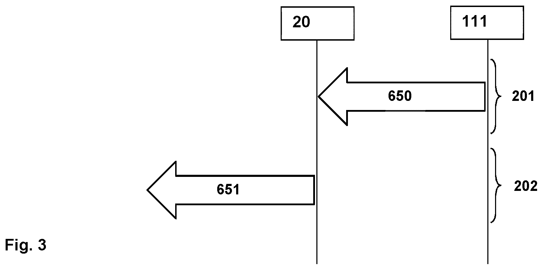

Figure 3 schematically and exemplarily illustrates the transmission, by the mobile communication network, and the reception, by the user equipment, of service resume information using an access stratum control channel or an access stratum dedicated control channel according to the present invention, as well as the access stratum of the user equipment indicating or forwarding the service resume information to the non-access stratum of the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, two instances of a user equipment 20 are schematically shown in a mobile communication network 100 and using an access network 110 of or associated with the mobile communication network 100, wherein communication services are able to be provided, to the user equipment 20, on a normal or increased quality-of-service level (in case that radio coverage is rather good - schematically represented, in Figure 1, by means of the user equipment 20 (or an instance thereof) being located completely within a radio coverage area 11 of a base station entity 111) and wherein (in case of worse radio transmission conditions - schematically represented, in Figure 1, by means of the user equipment 20 (or another instance thereof) being located on the border, or partly outside of the radio coverage area 11 of the base station entity 111) communication services are able to be provided at maximum on an inferior quality-of-service level, i.e. the inferior quality-of-service might deteriorate such that it approaches a loss of connection.
In the context of the present invention, the user equipment 20 represented in Figure 1 might also be called a considered user equipment or a specific user equipment; of course, further user equipments are typically present and connected to (and/or served by) the mobile communication network 100, however, again for the sake of simplicity, such further user equipments are not represented in Figure 1.

Figure 1 illustrates the situation of the user equipment 20 in a mobile communication network 100, typically being a non-terrestrial network, and comprising the access network 110 and a core network 120. The mobile communication network 100 is preferably a cellular telecommunications network comprising typically a plurality of network cells (or radio cells). The access network 110 is part of or associated with the mobile communication network 100. The user equipment 20 is able to be connected to (or served by) the (first) base station entity 111 and/or a further (or second) base station entity 112, both base station entities 111, 112 being part of the access network 110. Typically, the access network 110 comprises, besides the (first and second) base station entities 111, 112, still further base station entities which are, however and the sake of simplicity, not shown in Figure 1. In the exemplarily shown non-terrestrial network as an example of a mobile communication network 100 according to the present invention, each of the base station entities 111, 112 of the mobile communication network 100 (or of the access network 110 thereof) serves a radio coverage area or radio cell, the (first) base station entity 111 serving a first radio cell 11, and the second base station entity 112 serving a second radio cell 12. In a non-terrestrial network, such radio coverage areas or radio cells 11, 12 provided or generated by the base station entities 111, 112 of the access network 110 are typically geographically moving (i.e. continuously covering specific geographical areas at specific points in time but moving relative to the earth's surface, typically along the path of movement of the respective base station entity). The term base station entity 111, 112 serving the user equipment 20 is used here in association, especially and exemplarily, with satellites or high-altitude platforms being part of the non-terrestrial infrastructure of the mobile communication network 100 or of its (or assigned or associated) access network 110; however, it is to be understood, that such satellites do not necessarily need to comprise (or to be provided such that) all functional elements or functionalities of a base station entity, such as a gNB in, e.g., a 5G mobile communication network 100: In, or as part of, a non-terrestrial network, there are typically (and necessarily) further infrastructure elements such as ground stations providing feeder links, etc., and the distribution of functionalities (or parts) of a base station entity might be distributed also among these further infrastructure elements; nevertheless, a considered user equipment 20 is served by the base station entity functionality and at least the antenna part - or radio unit - needs to be located, in a non-terrestrial network, aboard a satellite or satellite device or aboard a high-altitude platform; hence at least from the perspective of that considered user equipment 20, the base station entity functionality is aboard that satellite or high-altitude platform.

According to the present invention, communication services are provided to the user equipment 20 using the access network 110 of or associated with the mobile communication network 100. In a typical mobile communication network 100 (i.e. in the geographical area covered by the mobile communication network 100), a user equipment 20 normally experiences a better radio coverage in some geographical areas than in others. This is especially true in predominantly terrestrial mobile communication networks 100 having rather stationary base station entities, i.e. in case that the radio coverage is rather static (geography-wise). In a typical mobile communication network 100 being predominantly a non-terrestrial network, a user equipment 20 normally also experiences a better radio coverage in some geographical areas than in others, but this dependency is additionally linked with a timing aspect: Due to the dynamic of the satellite movement (or the movement of high-altitude platforms) that are providing at least part of the base station entity-functionality, at a first location and, additionally, at a first point in time, the considered user equipment 20 might experience a better radio coverage than both at the same first location at a later (second) point in time but also at another (second) location at that later (second) point in time. Especially, due to using, typically, a plurality of different satellites (or constellation of satellites), at a still later (third) point in time, the radio coverage, at the first location, might again be better (due to, e.g., the next satellite of a specific constellation being located such as to be able to provide radio coverage). Therefore, in the context of the present invention, the terms "first kind of location" 250, "second kind of location" 260 as well as "first kind of time interval" 250', "second kind of time interval" 260' are used in order to indicate that the considered user equipment 20 is able to experience a rather good radio coverage if located, during a time interval of the first kind of time interval 250', at a location of the first kind of locations 250, and that the user equipment 20 will have worse radio coverage if located, during a time interval of the second kind of time intervals 260', at a location of either the first kind of locations 250 or the second kind of locations.
Such a scenario is schematically and exemplarily illustrated in Figure 2 which shows, in greater detail, just such a situation of a considered user equipment 20: While being located, during the time interval (schematically represented by means of a double arrow) of the first kind of time intervals 250', at a location (a geographical area schematically encircled in Figure 2, comprising the user equipment 20) of the first kind of locations 250, the user equipment 20 is able to be served, by at least one base station entity (schematically indicated, in Figure 2, by means of reference sign S1) of the access network 110 on the normal or increased quality-of-service level. In case that the user equipment 20 is located, during a time interval of the second kind of time intervals 260', at a location of either the first or the second kinds of locations 250, 260, it is, at most, able to be served (by any base station entity of the access network 110) on a quality-of-service level inferior compared to the normal or increased quality-of-service level (and perhaps it is not able to be served at all).
Figure 2 aims at showing the dynamical situation of moving base station entities by means of two different sets of arcs (of circles) and by means of two arrows S₁, S₂ that both indicate different points in time, namely a first point in time t₁, a second point in time t₂,a third point in time t₃, and a fourth point in time t₄, respectively: Reference sign S₁ refers to a base station entity, especially a satellite, e.g. base station entity 111, being able to provide radio coverage to the user equipment 20 roughly between the first and and second points in time t₁, t₂, and almost until the third point in time ts: At the first point in time t₁, the edge of the radio coverage area of S₁ is indicated by means of a drawn-through arc; at the second point in time t₂, the edge of the radio coverage area of S₁ is indicated by means of a dashed lined arc, having longer dashes; at the third point in time t₃, the edge of the radio coverage area of S1 is indicated by means of a dashed lined arc, having shorter dashes; and at the fourth point in time t₄, the edge of the radio coverage area of S1 is indicated by means of a dotted arc. The same representation also applies for a further (or second) base station entity, e.g. base station entity 111, being indicated, in Figure 2, by means of reference sign S₂, and a corresponding arrow that also indicates the (same) first to fourth points in time t₁, t₂, t₃, t₄.
As it can be seen, starting from the first point in time t₁ and until almost the third point in time t₃ (i.e. during a time interval of the first kind of time intervals 250'), the user equipment 20 is still located within the coverage area of satellite S₁, i.e. in a location of the first kind of locations 250, where a normal or increased quality-of-service level is able to be provided. Starting with the third point in time t₃, the user equipment 20 cannot be served any more by satellite S1 (at least not on a normal or increased quality-of-service level), and - unless another satellite is available - is only able to be served at maximum on an inferior quality-of-service level (compared to the normal or increased quality-of-service level). This is true for the user equipment 20 both in case it is located in (or at) its location 250, and as well if being moved to another location that is indicated by means of reference sign 260 and an encircled area.
However, moving to the location that is indicated, in Figure 2, by means of reference sign 260 would provide the possibility, to the user equipment 20, to be (either directly, or at least after a short period of time) served by the other satellite S₂ - cf. the (small-dash) dashed and dotted arcs (related to S2), touching and covering, respectively, area 260 in Figure 2.

Hence, according to the present invention, such radio coverage is able to be provided, to the (considered) user equipment 20, in order to be able to provide communication services either on a normal or increased quality-of-service level (while the user equipment 20 being located in certain locations and during certain time intervals), or on an inferior quality-of-service level (while the user equipment 20 being located in other locations and/or during other time intervals).
According to the present invention, it is advantageously possible to provide information, to the user equipment 20, about such a deterioration of the quality-of-service level, how to best respond to such a deterioration of the quality-of-service level and/or what to possibly do to avoid or at least to mitigate such a deterioration, and, also, when to again expect a better quality-of-service level.

This is realized, according to the present invention, by means of, at a first point in time, providing the user equipment 20 - while the user equipment being connected to the mobile communication network or while being in connected mode - with the service resume information and using an access stratum control channel or an access stratum dedicated control channel (i.e. the mobile communication network 100 transmits and the user equipment 20 receives, using the access stratum control channel or the access stratum dedicated control channel, the service resume information). At a second point in time, the access stratum of the user equipment 20 indicates or forwards the service resume information 650 to the non-access stratum of the user equipment 20. This is schematically shown in Figure 3, which exemplarily illustrates this transmission of the service resume information: At the first point in time 201 occurs the transmission, by the mobile communication network 100 (especially by the (first) base station entity 111 of the access network 110 of the mobile communication network 100), and the reception, by the user equipment 20, of the service resume information 650. This transmission occurs using an access stratum control channel or an access stratum dedicated control channel. At the second point in time 202, the access stratum of the user equipment 20 indicates or forwards the service resume information 650 and/or a service resume indication 651 to the non-access stratum of the user equipment (wherein the service resume indication 651 is derived from the service resume information 650).

Hence, according to the present invention and by means of transmitting the service resume information 650 to the user equipment 20, it is possible to realize an active provision of an information to the user equipment 20, where and/or when the user equipment 20 could gain a better quality-of-service level or a better (radio) signal level. This service resume information is transmitted by using control plane signaling from the mobile communication network 100, especially a cellular terrestrial network (TN) or a cellular non-terrestrial network (NTN). Especially the service resume information is used - especially in case of a non-terrestrial network - to indicate the dynamically changing satellite coverage of such a non-terrestrial network, due to the movement of serving satellites.

The transmission of the service resume information 650 corresponds to a notification method, using a radio channel of the mobile communication network 100 - especially a control plane channel, preferably a dedicated control channel -, wherein the service resume information 650 and/or the service indication information 651 (derived from the service resume information 650) informs the user equipment 20 (e.g. for or during an emergency call) about the better availability of (e.g. emergency call) services, by pointing out, e.g.:
-- better location to get better satellite service: Signaling translated in a notification such as, e.g., "Walk 500m towards NNW at 360° to gain better service", "Drive 1200m towards S at 180° to gain better service", etc.
-- better time, when (emergency call) service is able to continue (and an ongoing emergency call can be continued): "satellite connection will be lost in 5 seconds! Next satellite will take over in 46 seconds - your connection will automatically be reestablished at the current position"
This description rather describes the user presentation of the relevant information (i.e. what a user equipment 20 might display to inform a user of that user equipment 20); however, according to the present invention, the underlying transmission of the service resume information 650 (forming the basis on which such user-related indications might be able to be generated, e.g. as part of the service resume indication 651) is provided, to the user equipment 20, via a signaling (control) channel in a robust way.

Especially according to the present invention, the user equipment indicates the service resume indication 651 via local signaling or via an actuator or display means - and due to the access stratum of the user equipment 20 indicating or forwarding the service resume information 650 to the non-access stratum of the user equipment 20. Such service resume indication 651 might comprise, or might be intended to comprise an information relating to at least one time interval of the first kind of time intervals 250' and/or at least one location of the first kind of locations 250 (i.e. where the user equipment 20 is able to get a better quality-of-service level).
Especially, the at least one time interval of the first kind of time intervals 250' and/or the at least one location of the first kind of locations 250 is indicated, especially visually, haptically and/or acoustically, to a user of the user equipment 20, especially using a display means of the user equipment 20 and/or using a display means of a device locally connected to the user equipment 20. Preferably, the service resume indication 651 comprises a service level indication regarding the service level to be expected during the at least one time interval of the first kind of time intervals 250' and/or the at least one location of the first kind of locations 250 indicated by the service resume indication 651.

Especially according to the present invention, the transmission of the service resume information 650 to the user equipment 20 precedes the user equipment 20 indicating the service resume indication 651.
Furthermore especially according to the present invention, the transmission of the service resume information 650 is triggered - especially by either the user equipment 20 and/or the mobile communication network 100, especially the access network 110 - in case of either a current or an expected deterioration of quality-of-service, i.e. the service resume information is received, by the user equipment, especially in case that a quality-of-service level, monitored by the user equipment and/or by the access network, is determined to be (or is expected to shortly be) inferior to a specific predefined serving cell quality threshold.

The inferior quality-of-service level (while the user equipment 20 being located, during a time interval of the second kind of time intervals 260', at either the first or the second kind of locations 250, 260) - compared to the normal or increased quality-of-service level - might either correspond to a complete loss of connection, or to just a lower quality-of-service level or deterioration compared to the normal or increased kind. In the former case, the assumption is that no communication is possible to and from the considered user equipment 20. As the transmission of the service resume information 650 assumes such a communication between the user equipment 20 and the mobile communication network 100, in case that no communication is possible - while the user equipment 20 is located, during a time interval of the second kind of time intervals 260', at either the first or the second kind of locations 250, 260 -, this transmission of the service resume information 650 (first point in time 201) necessarily needs to occur during a time interval of the first kind of time intervals 250' and while the user equipment 20 is located at a location of the first kind of locations 250. The indication, or forwarding of the service resume information 650 to the non-access stratum of the user equipment 20 - at the second point in time - (and especially, as a consequence thereof, possibly the indication, via local signaling or via an actuator or display means, of the service resume indication 651) might then (but not necessarily needs to) occur later, i.e. after a loss of connection occurred.
Alternatively to a complete loss of connection, the inferior quality-of-service level (while the user equipment 20 being located, during a time interval of the second kind of time intervals 260', at either the first or the second kind of locations 250, 260) could also correspond to just a lower quality-of-service level or deterioration compared to the normal or increased kind (but a, perhaps somewhat slowed-down, data transmission towards the user equipment 20 would still be possible); in this case, the transmission of the service resume information 650 (i.e. the first point in time 201) might occur during either a time interval of the first kind of time intervals 250' (and while the user equipment 20 is located at a location of the first kind of locations 250) or during a time interval of the second kind of time intervals 260' (and while the user equipment 20 is located at either the first or the second kind of locations 250, 260).
Hence, according to the present invention, and depending on how strong the deterioration of the quality-of-service actually is, it is preferred that one out of the following applies:
-- the first point in time 201 occurs during a time interval of the first kind of time intervals 250' and while the user equipment 20 is located at a location of the first kind of locations 250, and the second point in time 202 occurs during a time interval of the second kind of time intervals 260' and while the user equipment 20 is located at either the first or the second kind of locations 250, 260, or
-- both the first point in time 201 and the second point in time 202 occur during a time interval of the first kind of time intervals 250' and while the user equipment 20 is located at a location of the first kind of locations 250, or
-- both the first point in time 201 and the second point in time 202 occur during a time interval of the second kind of time intervals 260' and while the user equipment 20 is located at a location of either the first or the second kind of locations 250, 260.

It is furthermore preferred according to the present invention that service resume indication 651 informs the user of the user equipment 20
-- of a comparatively shortly starting subsequent time interval of the first kind of time intervals 250', especially a subsequent time interval of the first kind of time intervals 250' starting in 10 seconds, or in 15 seconds, or in 20 seconds, or in 25 seconds, or in 30 seconds, or in 40 seconds, or in 50 seconds, or in 60 seconds,
   and/or
-- of a comparatively nearby location of the first kind of locations 250, especially a comparatively nearby location of the first kind of locations 250 that is able to be reached in 100 meters, on in 200 meters, or in 300 meters, or in 400 meters, or in 500 meters, or in 750 meters, or in 1000 meters, or in 2 km, or in 3 km or in 5 km, wherein the service resume indication 651 especially comprises a directional indication, in which direction the comparatively nearby location of the first kind of locations 250 is able to be reached, the directional indication especially indicating a northern, eastern, southern, or western direction, or directions in between these directions.

As already mentioned, the service resume information 650 is transmitted, according to the present invention, on the control plane, i.e. especially using a control channel and/or a control channel message and/or a non-access stratum message, especially one or a plurality out of the following:
-- a downlink dedicated control channel, DL-DCCH, message, especially a radio resource control reconfiguration, RRC-Reconfiguration, message and/or a downlink information transfer, DL-Information-Transfer, message,
-- a non-access stratum message, especially a non-access stratum registration accept message, NAS:RegistrationAccept message, and/or a non-access stratum tracking area update accept message, NAS:TrackingAreaUpdateAccept message,
wherein especially the service resume information 650 comprises at least one out of the following, especially in view of service continuation during the subsequent time interval of the first kind of time intervals 250' and/or at the target location of the first kind of locations 250:
-- frequency information.
-- timing information,
-- time-frequency information, especially information regarding specific physical resource blocks to use in case of a comparatively low quality-of-service level,
wherein especially the service resume information 650 is transmitted using a channel having reliable channel characteristics, especially a more robust coding scheme, especially using quadrature phase-shift keying, QPSK, binary phase-shift keying, BPSK, on-off-keying, OOK and/or a more robust hybrid-automatic repeat request, H-ARQ retransmission scheme and/or a new physical channel for transmission.

Especially, the service resume information 650 and/or the service resume indication 651 comprises a global navigation satellite system reference point and/or a map information and/or a polygon information, the global navigation satellite system reference point and/or the map information and/or the polygon information indicating better radio coverage and/or a better quality-of-service level and/or where the communication service is intended to continue, wherein especially the user equipment 20 calculates the vector from its current position to the target position.

Hence, according to the present invention, it is advantageously possible to provide a method for providing service resume (notification) information 650 in a mobile communication network 100, especially in a non-terrestrial network, i.e. the access network 110 being or corresponding to, or at least comprising a part being, a non-terrestrial network.

By means of transmitting the service resume information 650 using an access stratum control channel or an access stratum dedicated control channel - especially by means of defining an information element structure - it is advantageously possible to use a very reliable physical channel (e.g. PDCCH or an enhancement of) or very robust channel configuration.

It is especially preferred, according to the present invention, that such a channel configuration is specific to transmit such service resume (notification) information 650 - i.e. such a specific channel is able to be defined by means of using a high redundancy of data, a robust coding, a low data rate that is able to also operate under challenging radio channel conditions, etc. However, also existing (control) channels are able to be used for transmitting the service resume information 650, e.g. by enhancing the information carried via such channels.

The service resume information 650 is sent to the user equipment 20 from the network, in particular an non-terrestrial network, (i.e. the mobile communication network 100) in different situations (such as the following situations) using the control channel or the dedicated control channel:
-- while the user equipment 20 is still connected to the mobile communication network 100 in order to have the service resume information 650 being provided to the user equipment 20 before a service interruption happens; the service resume information 650 might be transmitted, e.g., based on a threshold of the radio link quality, timing, location, etc.; e.g. using any DL-DCCH message such as for example RRCReconfiguration, DLlnformationTransfer, etc;
-- at any time during an ongoing connection to have the service resume information 650 preconfigured in the user equipment 20, e.g. as a preparation for the point of time of service interruption (e.g. using any DL-DCCH message such as for example RRC:RRCReconfiguration, RRC:DLInformationTransfer, etc).

The service resume information 650 might be, as such, just a GNSS reference point to better coverage (in which case the user equipment 20 would, e.g., calculate the vector from its current position - which is also know to non-terrestrial network networks at least - to the target position), alternatively, the service resume information 650 might be in form of a "map" or map information providing the information of where the service is intended to continue.

According to all embodiments according to the present invention, the service resume information is able to already comprise some further information to speed up the process to find the relevant resources, such as frequency and timing information for service continuation at the target location; obviously the more information needs to be transmitted (in order to transmit the service resume information 650) the more robust the connection must (still) be; hence, typically in case of a connection currently breaking down, only a limited service resume information 650 is able to be provided.

Especially, at least one out of the following reliable channel characteristics are able to be applied according to the present invention, in order to transmit the service resume information 650:
-- a more robust coding scheme (e.g. QPSK or BPSK or OOK) than the normal control or user plane channel configuration;
-- a more robust ARQ retransmission scheme than normal control or user plane channel configuration;
-- the definition of a new physical channel for the transmission of such service resume information 650 (e.g. re-using the NB-loT reliability/coverage enhancement principles also for new radio (NR) non-terrestrial network connections, e.g. using a very small bandwidth, possibly down to using/indicating just one physical resource block PRB).

Especially according to the present invention, a serving cell quality threshold is able to be defined that triggers the signaling of the service resume information 650 on the new channel or channel configuration.
Furthermore especially, the service resume information 650 might signal the target location where the user equipment 20 shall head to for resumed coverage and/or that the current location of the user equipment 20 is not served for a defined time interval (e.g. next 10 seconds or minutes).
Furthermore especially, the service resume information 650 might signal the target coverage area (e.g. defined as a polygone) where the user equipment 20 shall head towards for resumed coverage and/or that the current location of the user equipment 20 is not served for a defined time interval (e.g. next 10 seconds or minutes).

Additionally, it is preferred according to the present invention that the target point or target area is calculated - especially based on the user equipment's 20 current location (known at the satellite from the call establishment signaling based on the user equipment's 20 GNSS information which is transmitted to the satellite, the trajectory and the timing of the out-flying (current service Sat) and the in-flying next sat including that satellite trajectory and timing). Especially, this calculation of the target point or target area might be performed under consideration of the ground topology (incl. radiofrequency shading effects, ground characteristics like valleys, roads, forests, etc. for which this information needs to be available at the satellite based on topology map databases).

## Claims

1. Method for providing communication services to a user equipment (20) using an access network (110) of or associated with a mobile communication network (100),
wherein - in order to provide communication services on a normal or increased quality-of-service level to the user equipment (20), and while the user equipment (20) is connected to the mobile communication network (100) or while the user equipment (20) is in connected mode - user plane data and/or control plane data are transmitted, in uplink and/or in downlink direction, between the user equipment (20) and the mobile communication network (100),
wherein the user equipment (20) - while being located, during a time interval of a first kind of time intervals (250'), at a location of a first kind of locations (250) - is able to be served, by at least one base station entity of the access network (110), on the normal or increased quality-of-service level, and
wherein the user equipment (20) - while being located, during a time interval of a second kind of time intervals (260'), at a location of either the first or the second kind of locations - is able to be served, by any base station entity of the access network (110), at maximum on a quality-of-service level inferior compared to the normal or increased quality-of-service level,
wherein, in order for the user equipment (20) to be provided with communication services, the method comprises the following steps:
-- in a first step and at a first point in time (201), the user equipment (20) receives, using an access stratum control channel or an access stratum dedicated control channel, a service resume information (650) from the mobile communication network (100) while the user equipment (20) being connected to the mobile communication network (100) or while being in connected mode,
-- in the second step and at a second point in time (202), the access stratum of the user equipment (20) indicates or forwards the service resume information (650) to the non-access stratum of the user equipment (20).

2. Method according to claim 1, wherein the access network (110) is or corresponds to, or at least comprises a part being, a non-terrestrial network.

3. Method according to one of the preceding claims, wherein, especially in the second step - and especially at or subsequent to the second point in time (202) -, the user equipment (20) indicates, via local signaling or via an actuator or display means, a service resume indication (651),
wherein especially the service resume indication (651) comprises, or is intended to comprise an information relating to at least one time interval of the first kind of time intervals (250') and/or at least one location of the first kind of locations (250), wherein especially the at least one time interval of the first kind of time intervals (250') and/or the at least one location of the first kind of locations (250) is indicated, especially visually, haptically and/or acoustically, to a user of the user equipment (20), especially using a display means of the user equipment (20) and/or using a display means of a device locally connected to the user equipment (20),
wherein especially the service resume indication (651) comprises a service level indication regarding the service level to be expected during the at least one time interval of the first kind of time intervals (250') and/or the at least one location of the first kind of locations (250) indicated by the service resume indication (651).

4. Method according to one of the preceding claims, wherein the first point in time (201), at which the service resume information (650) is received by the user equipment (20), precedes the second point in time, at which the user equipment (20) indicates the service resume indication (651),
wherein especially the service resume information (650) is received, by the user equipment (20), in case that a quality-of-service level, monitored by the user equipment (20) and/or by the access network (110), is determined to be inferior to a specific predefined serving cell quality threshold.

5. Method according to one of the preceding claims, wherein
-- the first point in time (201) occurs during a time interval of the first kind of time intervals (250') and while the user equipment (20) is located at a location of the first kind of locations (250), and the second point in time (202) occurs during a time interval of the second kind of time intervals (260') and while the user equipment (20) is located at either the first or the second kind of locations, or
-- both the first point in time (201) and the second point in time (202) occur during a time interval of the first kind of time intervals (250') and while the user equipment (20) is located at a location of the first kind of locations (250), or
-- both the first point in time (201) and the second point in time (202) occur during a time interval of the second kind of time intervals (260') and while the user equipment (20) is located at a location of either the first or the second kind of locations.

6. Method according to one of the preceding claims, wherein the service resume indication (651) informs the user of the user equipment (20)
-- of a comparatively shortly starting subsequent time interval of the first kind of time intervals (250'), especially a subsequent time interval of the first kind of time intervals (250') starting in 10 seconds, or in 15 seconds, or in 20 seconds, or in 25 seconds, or in 30 seconds, or in 40 seconds, or in 50 seconds, or in 60 seconds, and/or
-- of a comparatively nearby location of the first kind of locations (250), especially a comparatively nearby location of the first kind of locations (250) that is able to be reached in 100 meters, on in 200 meters, or in 300 meters, or in 400 meters, or in 500 meters, or in 750 meters, or in 1000 meters, or in 2 km, or in 3 km or in 5 km, wherein the service resume indication (651) especially comprises a directional indication, in which direction the comparatively nearby location of the first kind of locations (250) is able to be reached, the directional indication especially indicating a northern, eastern, southern, or western direction, or directions in between these directions.

7. Method according to one of the preceding claims, wherein
-- in case that the second point in time (202) occurs during a time interval of the first kind of time intervals (250') and while the user equipment (20) is located at a location of the first kind of locations (250), the service resume indication (651) informs the user of the user equipment (20) that the current time interval of the first kind of time intervals (250') is elapsing soon and/or that the first kind of locations (250) is extending, or moving in a specific direction, and/or
-- in case that the second point in time (202) occurs during a time interval of the second kind of time intervals (260') and while the user equipment (20) is located at a location of either the first or second kind of locations, the service resume indication (651) informs the user of the user equipment (20) that the current time interval of the second kind of time intervals (260') is elapsing soon and/or that either the first or the second kind of locations is extending, or moving in a specific direction.

8. Method according to one of the preceding claims, wherein the service resume information (650) is transmitted using a control channel and/or a control channel message and/or a non-access stratum message, especially one or a plurality out of the following:
-- a downlink dedicated control channel, DL-DCCH, message, especially a radio resource control reconfiguration, RRC-Reconfiguration, message and/or a downlink information transfer, DL-Information-Transfer, message,
-- a non-access stratum message, especially a non-access stratum registration accept message, NAS:RegistrationAccept message, and/or a non-access stratum tracking area update accept message, NAS:TrackingAreaUpdateAccept message, wherein especially the service resume information (650) comprises at least one out of the following, especially in view of service continuation during the subsequent time interval of the first kind of time intervals (250') and/or at the target location of the first kind of locations (250):
-- frequency information.
-- timing information,
-- time-frequency information, especially information regarding specific physical resource blocks to use in case of a comparatively low quality-of-service level, wherein especially the service resume information (650) is transmitted using a channel having reliable channel characteristics, especially a more robust coding scheme, especially using quadrature phase-shift keying, QPSK, binary phase-shift keying, BPSK, on-off-keying, OOK and/or a more robust hybrid-automatic repeat request, H-ARQ retransmission scheme and/or a new physical channel for transmission.

9. Method according to one of the preceding claims, wherein the service resume information (650) and/or the service resume indication (651) comprises a global navigation satellite system reference point and/or a map information and/or a polygon information, the global navigation satellite system reference point and/or the map information and/or the polygon information indicating better radio coverage and/or a better quality-of-service level and/or where the communication service is intended to continue, wherein especially the user equipment (20) calculates the vector from its current position to the target position.

10. User equipment (20) for being provided with communication services using an access network (110) of or associated with a mobile communication network (100), wherein the user equipment (20) is served by the access network (110), wherein - in order to provide communication services on a normal or increased quality-of-service level to the user equipment (20), and while the user equipment (20) is connected to the mobile communication network (100) or while the user equipment (20) is in connected mode - user plane data and/or control plane data are transmitted, in uplink and/or in downlink direction, between the user equipment (20) and the mobile communication network (100),
wherein the user equipment (20) - while being located, during a time interval of a first kind of time intervals (250'), at a location of a first kind of locations (250) - is able to be served, by at least one base station entity of the access network (110), on the normal or increased quality-of-service level, and
wherein the user equipment (20) - while being located, during a time interval of a second kind of time intervals (260'), at a location of either the first or the second kind of locations - is able to be served, by any base station entity of the access network (110), at maximum on a quality-of-service level inferior compared to the normal or increased quality-of-service level,
wherein, in order for the user equipment (20) to be provided with communication services, the user equipment (20) is configured such that:
-- at a first point in time (201), the user equipment (20) receives, using a control channel or a dedicated control channel, a service resume information (650) from the mobile communication network (100) while the user equipment (20) being connected to the mobile communication network (100) or while being in connected mode,
-- at a second point in time (202), the access stratum of the user equipment (20) indicates or forwards the service resume information (650) to the non-access stratum of the user equipment (20).

11. System or mobile communication network (100) for providing communication services to a user equipment (20) using an access network (110) of or associated with the mobile communication network (100),
wherein - in order to provide communication services on a normal or increased quality-of-service level to the user equipment (20), and while the user equipment (20) is connected to the mobile communication network (100) or while the user equipment (20) is in connected mode - user plane data and/or control plane data are transmitted, in uplink and/or in downlink direction, between the user equipment (20) and the mobile communication network (100),
wherein the user equipment (20) - while being located, during a time interval of a first kind of time intervals (250'), at a location of a first kind of locations (250) - is able to be served, by at least one base station entity of the access network (110), on the normal or increased quality-of-service level, and
wherein the user equipment (20) - while being located, during a time interval of a second kind of time intervals (260'), at a location of either the first or the second kind of locations - is able to be served, by any base station entity of the access network (110), at maximum on a quality-of-service level inferior compared to the normal or increased quality-of-service level,
wherein, in order for the user equipment (20) to be provided with communication services, the system or the mobile communication network (100) is configured such that:
-- at a first point in time (201), the user equipment (20) receives, using a control channel or a dedicated control channel, a service resume information (650) from the mobile communication network (100) while the user equipment (20) being connected to the mobile communication network (100) or while being in connected mode,
-- at a second point in time (202), the access stratum of the user equipment (20) indicates or forwards the service resume information (650) to the non-access stratum of the user equipment (20).

12. Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 9.

13. Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 9.

## Amended claims

### Amended claims in accordance with Rule 137(2) EPC.

1. Method for providing communication services to a user equipment (20) using an access network (110) of or associated with a mobile communication network (100), wherein - in order to provide communication services on a normal or increased quality-of-service level to the user equipment (20), and while the user equipment (20) is connected to the mobile communication network (100) or while the user equipment (20) is in connected mode - user plane data and/or control plane data are transmitted, in uplink or in downlink direction, between the user equipment (20) and the mobile communication network (100),
wherein the user equipment (20) - while being located, during a time interval of a first kind of time intervals (250'), at a location of a first kind of locations (250) - is served, by at least one base station entity of the access network (110), on the normal or increased quality-of-service level, and
wherein the user equipment (20) - while being located, during a time interval of a second kind of time intervals (260'), at a location of either the first or the second kind of locations - is served, by any base station entity of the access network (110), at maximum on a quality-of-service level inferior compared to the normal or increased quality-of-service level,
wherein, in order for the user equipment (20) to be provided with communication services, the method comprises the following steps:
-- in a first step and at a first point in time (201), the user equipment (20) receives, using an access stratum control channel or an access stratum dedicated control channel, a service resume information (650) from the mobile communication network (100) while the user equipment (20) being connected to the mobile communication network (100) or while being in connected mode,
-- in the second step and at a second point in time (202), the access stratum of the user equipment (20) indicates or forwards the service resume information (650) to the non-access stratum of the user equipment (20), wherein the user equipment (20) indicates, via local signaling or via an actuator or display means, a service resume indication (651).

2. Method according to claim 1, wherein the access network (110) is or corresponds to, or at least comprises a part being, a non-terrestrial network.

3. Method according to one of the preceding claims, wherein at or subsequent to the second point in time (202) -, the user equipment (20) indicatesthe service resume indication (651),
wherein especially the service resume indication (651) comprises, or is intended to comprise an information relating to at least one time interval of the first kind of time intervals (250') and/or at least one location of the first kind of locations (250), wherein especially the at least one time interval of the first kind of time intervals (250') and/or the at least one location of the first kind of locations (250) is indicated, especially visually, haptically and/or acoustically, to a user of the user equipment (20), especially using a display means of the user equipment (20) and/or using a display means of a device locally connected to the user equipment (20),
wherein especially the service resume indication (651) comprises a service level indication regarding the service level to be expected during the at least one time interval of the first kind of time intervals (250') and/or the at least one location of the first kind of locations (250) indicated by the service resume indication (651).

4. Method according to one of the preceding claims, wherein the first point in time (201), at which the service resume information (650) is received by the user equipment (20), precedes the second point in time, at which the user equipment (20) indicates the service resume indication (651),
wherein especially the service resume information (650) is received, by the user equipment (20), in case that a quality-of-service level, monitored by the user equipment (20) and/or by the access network (110), is determined to be inferior to a specific predefined serving cell quality threshold.

5. Method according to one of the preceding claims, wherein
-- the first point in time (201) occurs during a time interval of the first kind of time intervals (250') and while the user equipment (20) is located at a location of the first kind of locations (250), and the second point in time (202) occurs during a time interval of the second kind of time intervals (260') and while the user equipment (20) is located at either the first or the second kind of locations, or
-- both the first point in time (201) and the second point in time (202) occur during a time interval of the first kind of time intervals (250') and while the user equipment (20) is located at a location of the first kind of locations (250), or
-- both the first point in time (201) and the second point in time (202) occur during a time interval of the second kind of time intervals (260') and while the user equipment (20) is located at a location of either the first or the second kind of locations.

6. Method according to one of the preceding claims, wherein the service resume indication (651) informs the user of the user equipment (20)
-- of a comparatively shortly starting subsequent time interval of the first kind of time intervals (250'), especially a subsequent time interval of the first kind of time intervals (250') starting in 10 seconds, or in 15 seconds, or in 20 seconds, or in 25 seconds, or in 30 seconds, or in 40 seconds, or in 50 seconds, or in 60 seconds,
and/or
-- of a comparatively nearby location of the first kind of locations (250), especially a comparatively nearby location of the first kind of locations (250) that is able to be reached in 100 meters, on in 200 meters, or in 300 meters, or in 400 meters, or in 500 meters, or in 750 meters, or in 1000 meters, or in 2 km, or in 3 km or in 5 km, wherein the service resume indication (651) especially comprises a directional indication, in which direction the comparatively nearby location of the first kind of locations (250) is able to be reached, the directional indication especially indicating a northern, eastern, southern, or western direction, or directions in between these directions.

7. Method according to one of the preceding claims, wherein
-- in case that the second point in time (202) occurs during a time interval of the first kind of time intervals (250') and while the user equipment (20) is located at a location of the first kind of locations (250), the service resume indication (651) informs the user of the user equipment (20) that the current time interval of the first kind of time intervals (250') is elapsing soon and/or that the first kind of locations (250) is extending, or moving in a specific direction, and/or
-- in case that the second point in time (202) occurs during a time interval of the second kind of time intervals (260') and while the user equipment (20) is located at a location of either the first or second kind of locations, the service resume indication (651) informs the user of the user equipment (20) that the current time interval of the second kind of time intervals (260') is elapsing soon and/or that either the first or the second kind of locations is extending, or moving in a specific direction.

8. Method according to one of the preceding claims, wherein the service resume information (650) is transmitted using a control channel and/or a control channel message and/or a non-access stratum message, especially one or a plurality out of the following:
-- a downlink dedicated control channel, DL-DCCH, message, especially a radio resource control reconfiguration, RRC-Reconfiguration, message and/or a downlink information transfer, DL-Information-Transfer, message,
-- a non-access stratum message, especially a non-access stratum registration accept message, NAS:RegistrationAccept message, and/or a non-access stratum tracking area update accept message, NAS:TrackingAreaUpdateAccept message, wherein especially the service resume information (650) comprises at least one out of the following, especially in view of service continuation during the subsequent time interval of the first kind of time intervals (250') and/or at the target location of the first kind of locations (250):
-- frequency information.
-- timing information,
-- time-frequency information, especially information regarding specific physical resource blocks to use in case of a comparatively low quality-of-service level, wherein especially the service resume information (650) is transmitted using a channel having reliable channel characteristics, especially a more robust coding scheme, especially using quadrature phase-shift keying, QPSK, binary phase-shift keying, BPSK, on-off-keying, OOK and/or a more robust hybrid-automatic repeat request, H-ARQ retransmission scheme and/or a new physical channel for transmission.

9. Method according to one of the preceding claims, wherein the service resume information (650) and/or the service resume indication (651) comprises a global navigation satellite system reference point and/or a map information and/or a polygon information, the global navigation satellite system reference point and/or the map information and/or the polygon information indicating better radio coverage and/or a better quality-of-service level and/or where the communication service is intended to continue, wherein especially the user equipment (20) calculates the vector from its current position to the target position.

10. User equipment (20) for being provided with communication services using an access network (110) of or associated with a mobile communication network (100), wherein the user equipment (20) is served by the access network (110),
wherein - in order to provide communication services on a normal or increased quality-of-service level to the user equipment (20), and while the user equipment (20) is connected to the mobile communication network (100) or while the user equipment (20) is in connected mode - user plane data and/or control plane data are transmitted, in uplink or in downlink direction, between the user equipment (20) and the mobile communication network (100),
wherein the user equipment (20) - while being located, during a time interval of a first kind of time intervals (250'), at a location of a first kind of locations (250) - is served, by at least one base station entity of the access network (110), on the normal or increased quality-of-service level, and
wherein the user equipment (20) - while being located, during a time interval of a second kind of time intervals (260'), at a location of either the first or the second kind of locations - is served, by any base station entity of the access network (110), at maximum on a quality-of-service level inferior compared to the normal or increased quality-of-service level,
wherein, in order for the user equipment (20) to be provided with communication services, the user equipment (20) is configured such that:
-- at a first point in time (201), the user equipment (20) receives, using a control channel or a dedicated control channel, a service resume information (650) from the mobile communication network (100) while the user equipment (20) being connected to the mobile communication network (100) or while being in connected mode,
-- at a second point in time (202), the access stratum of the user equipment (20) indicates or forwards the service resume information (650) to the non-access stratum of the user equipment (20), wherein the user equipment (20) indicates, via local signaling or via an actuator or display means, a service resume indication (651).

11. System or mobile communication network (100) for providing communication services to a user equipment (20) using an access network (110) of or associated with the mobile communication network (100),
wherein - in order to provide communication services on a normal or increased quality-of-service level to the user equipment (20), and while the user equipment (20) is connected to the mobile communication network (100) or while the user equipment (20) is in connected mode - user plane data and/or control plane data are transmitted, in uplink or in downlink direction, between the user equipment (20) and the mobile communication network (100),
wherein the user equipment (20) - while being located, during a time interval of a first kind of time intervals (250'), at a location of a first kind of locations (250) - is served, by at least one base station entity of the access network (110), on the normal or increased quality-of-service level, and
wherein the user equipment (20) - while being located, during a time interval of a second kind of time intervals (260'), at a location of either the first or the second kind of locations - is served, by any base station entity of the access network (110), at maximum on a quality-of-service level inferior compared to the normal or increased quality-of-service level,
wherein, in order for the user equipment (20) to be provided with communication services, the system or the mobile communication network (100) is configured such that:
-- at a first point in time (201), the user equipment (20) receives, using a control channel or a dedicated control channel, a service resume information (650) from the mobile communication network (100) while the user equipment (20) being connected to the mobile communication network (100) or while being in connected mode,
-- at a second point in time (202), the access stratum of the user equipment (20) indicates or forwards the service resume information (650) to the non-access stratum of the user equipment (20), wherein the user equipment (20) indicates, via local signaling or via an actuator or display means, a service resume indication (651).

12. Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 9.

13. Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 9.
